Europäisches Patentamt

European Patent Office

Office européen des brevets

(11) Numéro de publication: **0 067 725**

**A1**

(12) # DEMANDE DE BREVET EUROPEEN

(21) Numéro de dépôt: **82400703.3**

(22) Date de dépôt: **20.04.82**

(51) Int. Cl.³: **B 65 G 33/12**

(30) Priorité: **14.05.81 FR 8109624**

(43) Date de publication de la demande:
**22.12.82 Bulletin 82/51**

(84) Etats contractants désignés:
**BE CH DE GB IT LI NL**

(71) Demandeur: **PARI-SYMAC S.A. Société Anonyme dite:**
**18, Avenue du Bois Préau**
**F-92502 Rueil-Malmaison(FR)**

(72) Inventeur: **Duchadeau, Pierre J-M.**
**Tour Léger 145 Grande Rue**
**F-92310 Sevres(FR)**

(74) Mandataire: **Moulines, Pierre et al,**
**Cabinet BEAU de LOMENIE 55, rue d'Amsterdam**
**F-75008 Paris(FR)**

(54) **Perfectionnement aux dispositifs comportant un ressort hélicoidal utilisé comme organe de transfert, d'extraction, de dosage ou de mélange.**

(57) Perfectionnement aux dispositifs comportant un ressort hélicoïdal utilisé comme organe de transfert, d'extraction, de dosage ou de mélange.

Le ressort hélicoïdal rotatif (1) présente à sa périphérie un organe hélicoïdal en matière souple (5) qui est en contact avec une paroi rigide (6) par rapport à laquelle le ressort (1) se déplace.

L'invention est utilisée dans les appareils comportant un ressort hélicoïdal de transfert.

Fig.1

<u>Perfectionnement aux dispositifs comportant un ressort hélicoïdal</u> <u>utilisé comme organe de transfert, d'extraction, de dosage ou de</u> <u>mélange.</u>

La présente invention a pour objet un perfectionnement aux dispositifs comportant un ressort hélicoïdal utilisé comme organe de transfert, d'extraction, de dosage ou de mélange.

Il est connu d'utiliser des dispositifs comportant au moins un ressort hélicoïdal entraîné en rotation et qui constitue soit un organe de transfert de produit comme dans les brevets français 1 436 336, 1 199 637 et 70 02362,soit un organe d'extraction de produit d'un réservoir comme dans les brevets français 69 20 340, 1 582 845,soit un organe de dosage de produit comme dans les brevets français 69 38 599 et 78 17 241.

Toutefois, l'utilisation d'un tel ressort hélicoïdal entraîné en rotation provoque dans certains cas une brisure du produit, un colmatage par la constitution d'une couche de produit entre le ressort hélicoïdal et la paroi fixe qui empêche la rotation du ressort après un certain temps de fonctionnement. Les dispositifs connus de ce type peuvent être bruyants en raison du contact du ressort avec la paroi fixe et ils peuvent présenter des vibrations avec certains produits ou à vide du fait que le ressort,lorsqu'il entre en vibration,présente des noeuds et des ventres qui amènent un blocage du ressort et sa détérioration. Dans le cas d'un seul ressort, une partie du produit demeure dans le dispositif lorsqu'il n'est plus alimenté en continu et il est impossible de le vider totalement sans démontage.

Avec les dispositifs connus,il est également possible que des grains de produit présentant une grosseur relativement importante se trouvent coincés entre le ressort et la paroi fixe. Lorsque le produit transporté est abrasif, il peut se trouver entraîné entre le ressort et entraîner l'abrasion rapide du ressort et de la paroi du récipient.

Dans le cas de certains produits pulvérulents,la prise de ceux-ci par le ressort risque de créer un voûtage ou une mauvaise prise des produits. Pour remédier à ces inconvénients,on utilise un dispositif de ressort perfectionné suivant l'invention. Conformément à la présente demande, le ressort hélicoïdal rotatif présente à sa périphérie un organe hélicoïdal en matière souple qui est en contact avec une paroi rigide par rapport à laquelle le ressort se déplace.

Suivant une autre caractéristique de l'invention, l'organe hélicoïdal en matière souple est constitué d'une brosse constituée de filaments souples fixés à la périphérie du ressort hélicoïdal et en contact avec la paroi rigide.

La brosse disposée à la périphérie du ressort permet d'éviter le passage du produit entre le ressort et la paroi et le phénomène de brisure du produit. Par ailleurs, le contact de la brosse avec la paroi du récipient permet d'éviter le colmatage du produit et le mauvais fonctionnement du ressort. Le centrage du ressort, du fait de la présence des filaments souples en contact avec la paroi du récipient, évite le contact bruyant du ressort avec ladite paroi.

Les phénomènes de vibration que l'on avait constatés dans les dispositifs connus sont supprimés en raison de l'amortissement des vibrations par les poils de la brosse. Avec le dispositif de ressort muni d'une brosse à sa périphérie, le produit est totalement évacué du récipient et il évite le démontage pour la vidange totale.

La présence de la brosse à la périphérie du ressort permet d'empêcher le passage de grains de produits entre le ressort et la paroi fixe du récipient et, dans le cas de produits abrasifs, d'éviter l'usure prématurée de la paroi du récipient et du ressort dont on améliore ainsi la durée de fonctionnement. L'utilisation de produits d'écoulement moyen est facilitée, du fait que la brosse évite le voûtage et assure une bonne entrée des produits dans l'appareil de transfert.

Dans les appareils de distribution de produit par une fente ou toute autre sorte de tamisage, la brosse prévue à la périphérie du ressort permet d'obtenir une meilleure répartition du produit et d'obtenir un résultat supérieur. Enfin, la présence de la brosse permet d'obtenir une meilleure aération du produit traité.

D'autres caractéristiques et avantages de l'invention seront mieux compris à la lecture de la description qui va suivre d'un mode de réalisation et en se référant aux dessins annexés, sur lesquels :

- la figure 1 est une vue en coupe axiale d'un ressort hélicoïdal comportant à sa périphérie une brosse suivant l'invention;

- la figure 2 est une vue en coupe à plus grande échelle du ressort muni d'une brosse;

- la figure 3 est une vue en coupe axiale d'un dispositif constitué d'un élément tubulaire et d'un ressort hélicoïdal perfectionné suivant l'invention;

- la figure 4 est une vue en coupe axiale d'un dispositif constitué d'un élément tubulaire renfermant deux ressorts hélicoïdaux concentriques;

- la figure 5 est une vue en coupe axiale d'un dispositif constitué d'un élément tubulaire renfermant un ressort hélicoïdal et une tige centrale;

- la figure 6 est une vue en perspective d'un extracteur perfectionné suivant l'invention;

- la figure 7 est une vue en perspective d'un distributeur perfectionné suivant l'invention.

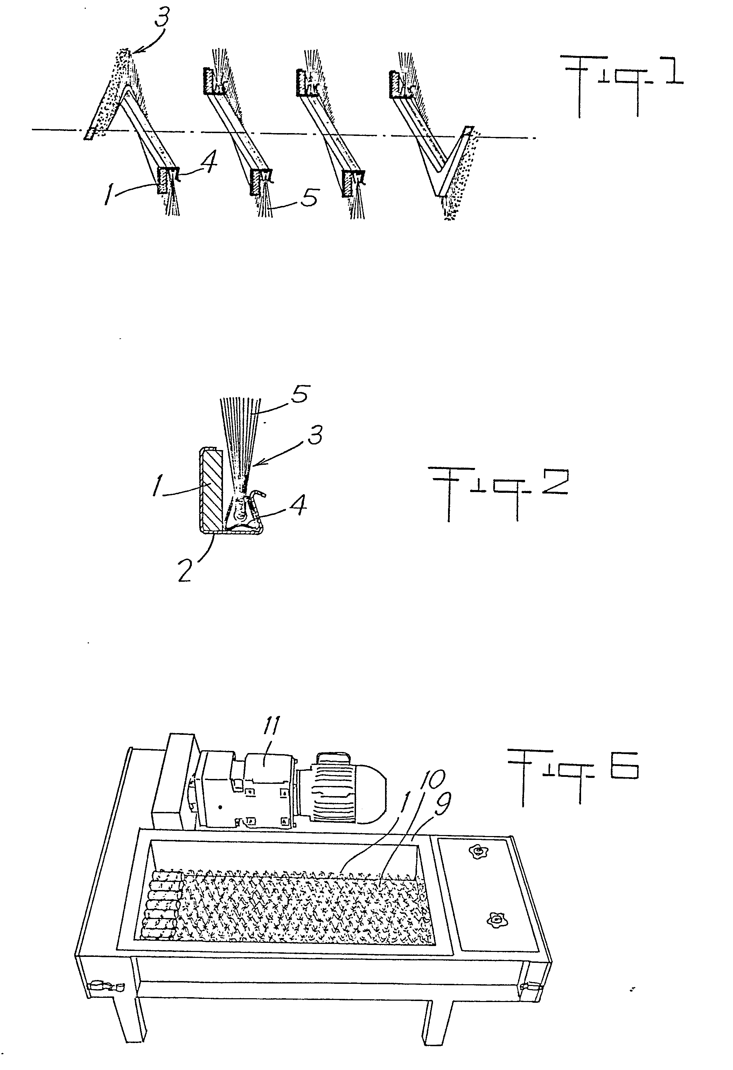

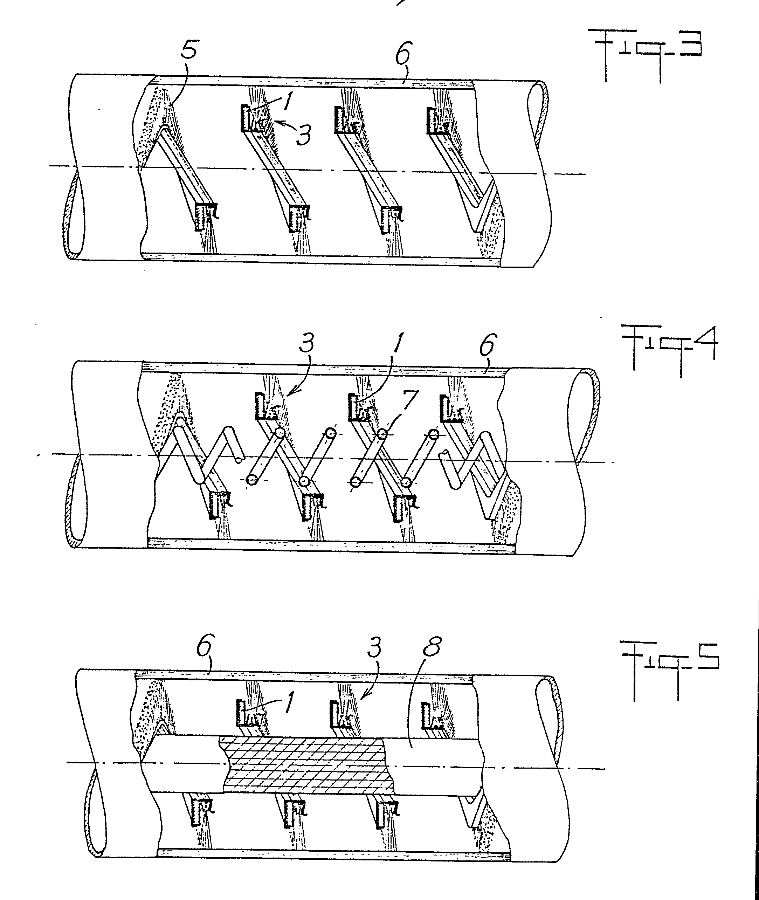

Aux figures 1 et 2, on a représenté un mode de réalisation d'un organe de transfert, d'extraction, de dosage ou de mélange qui est utilisé dans différents dispositifs suivant l'invention.

L'organe représenté aux figures 1 et 2 est constitué d'un ressort hélicoïdal 1 sur lequel est fixée latéralement au moyen d'agrafes 2 une brosse 3 de forme hélicoïdale comportant un élément hélicoïdal 4 présentant en section un profil en U et dans lequel sont maintenus serrés des filaments souples 5 constituant les poils de la brosse s'étendant suivant une ligne continue de forme hélicoïdale. Les filaments souples de la brosse sont constitués notamment de métal, de matière plastique ou de matière animale ou végétale.

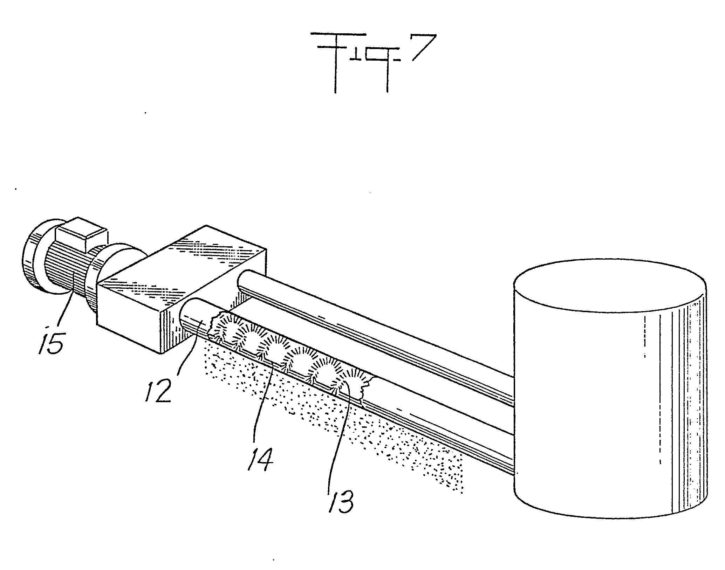

A la figure 3, on a représenté un mode de réalisation d'un dispositif de transfert de produit qui est constitué d'un élément tubulaire 6 dans lequel est monté un ressort hélicoïdal 1 muni à sa périphérie d'une brosse hélicoïdale 3, ainsi qu'il a été décrit ci-dessus. Dans ce mode de réalisation, le ressort 1 est entraîné en rotation de façon connue par un moyen non représenté au dessin et les filaments souples 5 de la brosse sont en contact avec la surface intérieure de l'élément tubulaire 6.

4

A la figure 4, on a représenté une variante de réalisation dans laquelle un ressort hélicoïdal 7 est disposé à l'intérieur et coaxialement au ressort 1 muni d'une brosse hélicoïdale 3, les ressorts 1 et 7 étant montés rotatifs dans un élément tubulaire 6.

A la figure 5, on a représenté un autre dispositif de transfert qui comprend un élément tubulaire 6 à l'intérieur duquel est monté rotatif un ressort 1 muni d'une brosse hélicoïdale 3 dont les filaments 5 sont en contact avec la surface intérieure dudit élément tubulaire. A l'intérieur du ressort 1 et coaxialement à celui-ci est disposé une tige ou un tube 8.

A la figure 6, on a représenté un dispositif extracteur qui est placé à la base d'un silo ou réservoir contenant un produit pulvérulent. Le dispositif comprend un récipient 9 ouvert à sa partie supérieure et dans lequel sont disposés de façon juxtaposée longitudinalement des ressorts hélicoïdaux 1 qui reposent sur le fond 10 du récipient et qui sont entraînés en rotation simultanément par un moyen d'entraînement 11.

Conformément à l'invention, les ressorts 1 présentent à leur périphérie une brosse qui est en contact avec le fond 10 du récipient extracteur, comme il a été décrit ci-dessus.

A la figure 7, on a représenté un distributeur qui comprend un élément tubulaire 12 dans lequel est monté rotatif un ressort hélicoïdal 13 entraîné en rotation par un organe moteur 15, ledit ressort 13 comportant à sa périphérie une brosse, comme il a été décrit ci-dessus, et qui est en contact avec la paroi de l'élément tubulaire 12 qui présente une fente 14 par laquelle le produit est distribué lors du déplacement du ressort.

Bien entendu, la description n'est pas limitative et l'homme de l'art pourra y apporter des modifications sans sortir pour cela du domaine de l'invention.

R E V E N D I C A T I O N S

1. Perfectionnement aux dispositifs comportant un ressort hélicoïdal utilisé comme organe de transfert, d'extraction, de dosage ou de mélange, caractérisé en ce que le ressort hélicoïdal rotatif (1) présente à sa périphérie un organe hélicoïdal en matière souple (5) qui est en contact avec une paroi rigide (6) par rapport à laquelle le ressort (1) se déplace.

2. Perfectionnement aux dispositifs suivant la revendication 1, caractérisé en ce que l'organe hélicoïdal en matière souple est constitué d'une brosse (3) constituée de filaments souples (5) fixés à la périphérie du ressort hélicoïdal (1) et en contact avec la paroi rigide (6).

3. Perfectionnement aux dispositifs suivant la revendication 2, caractérisé en ce que les filaments souples (5) de la brosse (3) sont maintenus serrés à l'une de leurs extrémités dans un élément hélicoïdal (4) présentant en section un profil en U et qui est fixé sur le ressort hélicoïdal (1).

4. Perfectionnement aux dispositifs suivant la revendication 3, caractérisé en ce que l'élément hélicoïdal (4) portant les filaments (5) souples de la brosse est fixé sur le ressort hélicoïdal (1) au moyen d'agrafes (2).

5. Perfectionnement aux dispositifs suivant l'une quelconque des revendications 1 à 4, caractérisé en ce que le ressort hélicoïdal (1) est monté rotatif dans un élément tubulaire (6) dont la paroi est en contact avec l'extrémité libre des filaments souples (5) de la brosse hélicoïdale (3) montée sur le ressort hélicoïdal (1).

6. Perfectionnement aux dispositifs suivant l'une quelconque des revendications 1 à 4, caractérisé en ce que le dispositif comprend deux ressorts hélicoïdaux (1, 7) disposés coaxialement et entraînés en rotation dans un élément tubulaire (6), le ressort extérieur (1) comportant à sa périphérie une brosse hélicoïdale (3) dont les filaments souples (5) sont en contact avec la paroi de l'élément tubulaire (6).

7. Perfectionnement aux dispositifs suivant l'une quelconque des revendications 1 à 4, caractérisé en ce que le dispositif comprend un ressort hélicoïdal (1) à l'intérieur duquel est montée coaxialement une tige (8), ledit ressort et la tige étant disposés dans un élément tubulaire (6) dont la paroi à l'intérieur est en contact avec une brosse hélicoïdale (3) fixée à la périphérie du ressort hélicoïdal (1).

8. Perfectionnement aux dispositifs suivant l'une quelconque des revendications 1 à 4, caractérisé en ce que le dispositif est un extracteur disposé à la base d'un réservoir de produit et qui comprend un récipient (9) à fond plat (10) sur lequel sont juxtaposés longitudinalement des ressorts hélicoïdaux (1) présentant à leur périphérie une brosse hélicoïdale (3) dont les filaments souples sont en contact avec la paroi du fond (10) de l'extracteur.

9. Perfectionnement aux dispositifs suivant l'une quelconque des revendications 1 à 4, caractérisé en ce que le dispositif est un distributeur présentant un élément tubulaire (12) comportant au moins un orifice (14) pour le passage du produit et dans lequel est disposé un ressort (1) hélicoïdal comportant à sa périphérie une brosse hélicoïdale (3) dont les filaments souples (5) sont en contact avec la paroi de l'élément tubulaire (12).

Fig. 1

Fig. 2

Fig. 6

2/3

Fig-3

Fig-4

Fig-5

Fig. 7

15

12

14

13

# Office européen des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-C- 104 888 (R.V. BROODBANK) <br><br> * En entier * <br><br> --- | 1-3,5,9 | B 65 G 33/12 |
| A | US-A-3 684 082 (W.A. WARDELL) <br><br> * Colonne 4, lignes 45-66; figures * <br><br> --- | 1-3,5,7,9 | |
| A | US-A-3 675 367 (R. AMBURN) <br> * Colonne 6, ligne 67 - colonne 7, ligne 34; figures * <br><br> --- | 1,2,5 | |
| A | FR-A-1 033 143 (J. MARTIN) <br> * Page 2, colonne 1, lignes 30-48; figures * <br><br> --- | 1 | |
| A,D | FR-A-2 171 838 (RASTOIN) <br> * Revendications; figures * <br><br> --- | 6,7 | **DOMAINES TECHNIQUES RECHERCHES (Int. Cl. ³)** <br><br> B 65 G <br> C 03 B |
| A | FR-A-1 434 363 (TAUPIN) <br> * Resume * <br><br> ----- | 8 | |

Le présent rapport de recherche a été établi pour toutes les revendications

| Lieu de la recherche <br> LA HAYE | Date d'achèvement de la recherche <br> 13-08-1982 | Examinateur <br> VAN ROLLEGHEM F.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82